# EUROPÄISCHE PATENTSCHRIFT

(11) **EP 2 358 513 B1**
(45) Veröffentlichungstag und Bekanntmachung des Hinweises auf die Patenterteilung: **24.10.2012**
(21) Anmeldenummer: 08875454.4
(22) Anmeldetag: 12.12.2008
(51) Int. Cl.: B29C 45/72, B29C 49/64

(54) **SYSTEM ZUR NACHBEHANDLUNG UND ÜBERGABE VON VORFORMLINGEN**
SYSTEM FOR POST-TREATING AND TRANSFERRING PREFORMS
SYSTÈME DE POST-TRAITEMENT ET DE TRANSFERT DE PRÉFORMES

(43) Veröffentlichungstag der Anmeldung: 24.08.2011
(73) Patentinhaber: MHT Mold & Hotrunner Technology AG, 65239 Hochheim (DE)
(72) Erfinder: NETER, Witold, Newman Georgia 30265 (US); THÖMMES, Helmut, 54441 Kastel-Staadt (DE); PETRY, Rainer, 55270 Klein-Winternheim (DE); WAGNER, Christian, 55126 Mainz (DE)
(74) Vertreter: WSL Patentanwälte Partnerschaftsgesellschaft
(86) Internationale Anmeldenummer: PCT/EP2008/067470
(87) Internationale Veröffentlichungsnummer: WO 2010/066308

(56) Entgegenhaltungen:
- WO-A-2004/041510
- US-A- 4 592 719
- US-B1- 6 299 431

## Beschreibung

Die vorliegende Erfindung betrifft ein System zur Nachbehandlung von mittels Spritzgießen hergestellter Vorformlinge.

Beispielsweise werden handelsübliche PET-Flaschen im allgemeinen durch Streckblasformen des Hohlkörper-Preforms bzw. Hohlkörper-Vorformlings hergestellt. Dabei wird der Hohlkörper-Preform in einem ersten Schritt mittels Spritzgießen erstellt. Das sich an den Spritzgießvorgang anschließende Streckblasformen kann entweder unmittelbar nach Herstellung des Hohlkörper-Preforms oder zu einem späteren Zeitpunkt erfolgen. Bei der Herstellung der entsprechenden Spritzgießformen ist ein hoher Aufwand von Nöten, da die Spritzgießform einerseits für sehr hohe Drücke ausgelegt sein muss und andererseits auch entsprechende beheizte und/oder gekühlte Kanäle aufweisen muss.

Üblicherweise besteht ein Spritzgießwerkzeug zur Herstellung von PET-Vorformlingen aus einer Vielzahl, z. B. 96, Kavitäten, in die entsprechend ausgebildete Werkzeugkerne eingeführt werden. Bei geschlossenem Werkzeug, d.h. wenn der Kern in die entsprechende Kavität eingesetzt ist, wird zwischen dem Kern einerseits und der Kavität andererseits ein Raum, der sogenannte Formraum, gebildet. In diesen Raum wird dann der plastifizierte Kunststoff, z. B. PET, unter hohem Druck eingespritzt. Sobald der PET-Vorformling genügend abgekühlt ist, kann die Form geöffnet und der Vorformling entnommen werden.

Um die Zykluszeiten, d.h. die Zeit von einem Spritzvorgang bis zu dem nächsten Spritzvorgang, zu reduzieren, ist es bereits üblich, den Preform zu einem sehr frühen Zeitpunkt aus der Form zu entnehmen, zu dem der Preform an seinen Außenflächen bereits fest ist, dessen innerer Bereich jedoch noch flüssig ist. In diesem Zustand wird der Vorformling im allgemeinen ein Aufnahmeelement, häufig eine sogenannte Aufnahmeplatte, übergeben, die meist aus einer Gruppe von Aufnahmekavitäten besteht, wobei jede Aufnahmekavität einen Preform aufnehmen kann. So ist es beispielsweise bei den sogenannten Vertikalwerkzeugen, d.h. denjenigen Spritzgießwerkzeugen, die sich durch eine vertikale Bewegung des einen Werkzeugteils gegenüber dem anderen öffnen, möglich, die Werkzeugform bereits nach z. B. 10 Sekunden zu öffnen, eine Aufnahmeplatte mit entsprechenden Aufnahmekavitäten in die Form einzufahren, die einzelnen Preforms in die Aufnahmekavitäten mittels Schwerkraft hineinfallen zu lassen, die Aufnahmeplatte mit den Preforms aus dem Werkzeug herauszufahren, die Form wieder zu schließen und den nächsten Spritzgießvorgang zu beginnen. Während des nächsten Spritzgießvorgangs verbleiben die vorherigen Preforms in der Aufnahmekavität, die üblicherweise gekühlt wird.

Die Aufnahmeplatte fungiert somit als Entnahmeelement, welches einzelne Aufnahmeelemente zur Aufnahme eines Preforms und einer Vorrichtung zum Bewegen des Entnahmeelementes zwischen zwei Werkzeughälften einer geöffneten Spritzgießform und zum Bewegen des Entnahmeelementes aus der geöffneten Spritzgießform heraus aufweist.

Da der Preform zur Abkühlung in der Aufnahmekavität eine verhältnismäßig lange Zeit verweilen muss, so dass in der Regel bereits der nächste Vorformling aus dem Spritzgießwerkzeug entnommen werden kann, bevor der Preform in der Aufnahmekavität so weit abgekühlt ist, dass er ohne die Gefahr einer Beschädigung entnommen werden kann, ist es bereits üblich, Aufnahmeplatten zu verwenden, die mehrere Gruppen von Aufnahmekavitäten besitzen, wobei jede Gruppe so viel Aufnahmekavitäten aufweist, wie das Spritzgießwerkzeug Preforms pro Spritzzyklus bereitstellt. Die einzelnen Aufnahmekavitätengruppen werden dann nacheinander mit Preforms bestückt, so dass der einzelne Preform länger als einen Spritzgießzyklus in der Aufnahmekavität verbleiben kann.

Um die Nachbehandlungszeit in der Entnahmeplatte weiter zu reduzieren, ist bereits in der US 6,475,422 vorgeschlagen worden, einen Stift in den Preform einzubringen, über dessen Spitze Kühlfluid in den Bodenbereich des Preforms geleitet wird. Dabei tritt das Kühlfluid an der Stiftspitze aus und strömt dann durch den ringförmigen Spalt, der sich zwischen dem Kühlstift und der Innenwand des Preforms bildet, aus dem Preform in die Umgebung. Somit wird der Preform nicht nur von außen, sondern auch von innen gekühlt.

Bei dieser Ausführungsform muss jedoch über den Kühlstift eine erhebliche Menge Kühlfluid unter relativ hohem Druck zugeführt werden, um sicherzustellen, dass genügend Kühlfluid durch den rignförmigen Spalt strömt und genügend Wärme abführt. Um genügend Kühlfluid bereitzustellen, ist es notwendig, den Kühlstift mit Druckluft zu beaufschlagen, was die teuere Bereitstellung von entsprechenden Zuluftleitungen sowie entsprechenden Kompressoren mit sich bringt. Zudem führt diese Art der Kühlfluidzuführung zu einer sehr schnellen Abkühlung des Bodenabschnittes des Preforms, während die Wand- und insbesondere die Halsabschnitte nur relativ langsam abgekühlt werden, was zu großen Temperaturunterschieden innerhalb des Preforms führt, wodurch die Qualität des Preforms beeinträchtigt werden kann.

In der WO 2007/063063 ist daher bereits vorgeschlagen worden, den Nachbehandlungsstift porös auszuführen, so dass das Kühlfluid nicht nur über die Stiftspitze, sondern auch entlang der gesamten Umfangsfläche des Kühlstiftes zugeführt wird. Durch diese Maßnahme kann der Temperaturunterschied innerhalb des Preforms deutlich reduziert werden. Poröse Nachbehandlungsstifte sind jedoch relativ aufwendig in der Herstellung und müssen ebenfalls mit hohem Druck versorgt werden, um einen ausreichenden Kühlmittelfluidfluss zu gewähneisten. Andere Lösungen zur Kühlung von mittels Spritzgiessen hergestellter Vorformliegen werden in WO2004 041 510 und US6299431 vorgeschlagen.

Ausgehend von dem beschriebenen Stand der Technik ist es daher Aufgabe der vorliegenden Erfindung, ein System zur Nachbehandlung von mittels Spritzgießen hergestellter Vorformlinge bereitzustellen, das kostengünstig ohne Bereitstellung von Druckluft betreibbar ist und den sich zwangsläufig während der Nachbehandlung ausbildenden Temperaturgradienten innerhalb des Preforms minimiert.

Erfindungsgemäß wird diese Aufgabe durch ein System nach Anspruch 1 gelöst.

Grundsätzlich muss das Nachbehandlungselement kein Kühlfluid zur Verfügung stellen, da das stiftförmige Kanalelement mit einer Vakuum- oder Unterdruckquelle verbunden werden kann und dann das Kühlfluid einfach aus der Umgebung angesaugt wird.

Wird hingegen das stiftförmige Kanalelement lediglich mit Umgebungsdruck verbunden, so sollte das Nachbehandlungselement eine Zuführung für Kühlmittel aufweisen.

So kann das Nachbehandlungselement beispielsweise einen Kühlmitteleinlass aufweisen, welcher außerhalb des stiftförmigen Kanalelementes angeordnet ist, wobei der Kühlmitteleinlass vorzugsweise als Hülse ausgebildet ist, welche das stiftförmige Kanalelement umgibt, so dass das Kühlmittel über einen sich zwischen stiftförmigem Kanalelement und Hülse bildenden, vorzugsweise ringförmigen, Spalt zugeführt werden kann. Während der Kühlmittelauslass zum Abführen des Kühlfluids aus dem Preform dient, dient der Kühlmitteleinlass zum Einbringen des Kühlmittels in den Preform.

In einer besonders bevorzugten Ausführungsform ist eine Strömungsmaschine, beispielsweise ein Ventilator oder ein Gebläse, vorgesehen, die am Kühlmitteleinlass einen Kühlfluiddruck zwischen 1 und 3 bar, vorzugsweise zwischen 1 und 1,5 bar und am besten zwischen 1 und 1,2 bar bereitstellt. Mit einem solch geringen Druck ist eine gleichmäßige Nachbehandlung des Preforms möglich, zudem kann auf einen Druckluftanschluss verzichtet werden, da übliche Strömungsmaschinen, wie z. B. Gebläse oder Ventilatoren, in der Lage sind, den entsprechenden Kühlfluiddruck bereitzustellen. Aufgrund der erfindungsgemäßen Kühlfluidrichtung kann auf die aufwendige und kostenträchtige Bereitstellung von Druckluft verzichtet werden. Die Verwendung einer Strömungsmaschine hat zudem den Vorteil, dass es zu einer gleichmäßigeren Abkühlung des Preforms kommt.

Alternativ oder in Kombination kann eine Strömungsmaschine vorgesehen sein, die am Kühlmittelauslass einen Kühlfluiddruck von weniger als 1 bar, vorzugsweise zwischen 0,8 und 1 bar, und besonders bevorzugt zwischen 0,9 und 0,99 bar bereitstellt.

In einer weiteren besonders bevorzugten Ausführungsform weist das Nachbehandlungselement mindestens ein Übergabeelement auf, mit welchem ein Preform vom Entnahmeelement zum Nachbehandlungselement übergeben werden kann.

Eine solche Übergabe kann erforderlich sein, wenn der Preform aus dem Entnahmeelement genommen werden soll, damit ein weiterer Preform des folgenden Spritzgießzyklus in diesem Nachbehandlungselement aufgenommen werden kann.

Zusätzlich kann das Übergabeelement eine Übergabehülse aufweisen, wobei die Übergabehülse einen Durchgangskanal aufweist, dessen erstes Ende mit einer Vakuumquelle verbunden werden kann und dessen zweites Ende in der ersten Position innerhalb eines in dem Aufnahmeelement aufgenommenen Vorformlings endet, wobei das zweite Ende vorzugsweise an der Umfangsfläche der Hülse angeordnet ist. Die Hülsenform erlaubt eine einfache und gleichzeitig den Preform schonende Übergabe der Hülse vom Entnahmeelement zum Nachbehandlungselement.

Weiterhin kann das Übergabeelement einen Druckluftanschluss aufweisen, über den Druckluft in den im Aufnahmeelement aufgenommenen Vorformling eingebracht werden kann, um den Vorformling von dem Übergabeelement auszuwerfen. Mit anderen Worten dient das Übergabeelement lediglich dazu, die Preforms aus dem Nachbehandlungselement zu entnehmen. Ein längeres Verweilen des Preforms auf bzw. im Übergabeelement ist nicht geplant.

Grundsätzlich kommt als Kühlmittel jedes Fluid in Frage, auch wenn gasförmige Kühlmittel und insbesondere Luft besonders bevorzugt sind.

In einer weiteren bevorzugten Ausführungsform weist das Nachbehandlungselement eine Kühlmittelverteilerplatte auf, die mehrere Nachbehandlungsstifte umfasst. Dies hat den Vorteil, dass mit einer einzelnen Kühlmittelverteilerplatte eine Mehrzahl von Nachbehandlungsstiften mit Kühlmittel versorgt werden können.

Mit Vorteil kann die Kühlmittelverteilerplatte um eine Drehachse gedreht werden, um Vorformlinge, die von dem Entnahmeelement auf die Kühlmittelverteilerplatte übergeben wurden, auszuwerfen, wobei vorzugsweise die Kühlmittelverteilerplatte um etwa 90 ° gedreht werden kann.

Besonders zweckmäßig ist es, wenn die Strömungsmaschine innerhalb der Kühlmittelverteilerplatte angeordnet oder an dieser befestigt ist, wobei der Einlauf der Strömungsmaschine mit dem Kühlmittelauslass des zumindest einen Nachbehandlungsstifts verbunden ist, während der Auslauf der Strömungsmaschine mit einer Kühlmittelverteilerplattenöffnung zur Umgebung verbunden ist, wobei die Kühlmittelverteilerplattenöffnung vorzugsweise an der den Nachbehandlungsstiften gegenüberliegenden Seite der Kühlmittelverteilerplatte angeordnet ist. Beispielsweise kann die Kühlmittelverteilerplatte eine Druckkammer aufweisen, mit der das Gebläse verbunden ist.

Alternativ dazu kann der Auslauf der Strömungsmaschine mit dem Kühlmitteleinlass des zumindest einen Nachbehandlungsstiftes verbunden sein, während der Einlauf mit der Kühlmittelverteilerplattenöffnung zur Umgebung verbunden ist.

Für manche Anwendungsfälle kann es von Vorteil sein, wenn die als Kühlmitteleinlass ausgebildete Hülse einen Außenumfang hat, der in etwa der inneren Wandungsöffnung des Preforms entspricht, so dass in der ersten Position die Außenseite der Kühlmitteleinlasshülse die Innenseite des Preforms berührt.

In einer weiteren bevorzugten Ausführungsform weist die Kühlmittelverteilerplatte Kühlkanäle zur Zuführung eines Kühlmittels zur Kühlung der Kühlmittelverteilerplatte selbst auf. Dabei wird hier vorzugsweise Wasser für die Kühlung der Kühlmittelverteilerplatte verwendet. Die Kühlung der Kühlmittelverteilerplatte sorgt zum einen dafür, dass die Hülse, die in einigen Ausführungsform direkt mit dem Preform in Kontakt tritt, gekühlt wird, z. B. auf weniger als 10°C, und zum anderen die in den Preform zugeführte Luft gekühlt wird.

In einer weiteren bevorzugten Ausführungsform ist eine Verschlusskappe vorgesehen, die auf das Kanalelement und/oder den Kühlmitteleinlass aufgesetzt werden kann, um diese zu verschließen.

Prinzipiell kann es beim Betrieb eines PET-Spritzgießsystems vorkommen, dass aus irgendwelchen Gründen eines (oder mehrere) der Formnester nicht mehr betrieben werden kann. So könnte ein Werkzeug mit 96 Formraumkavitäten pro Spritzgießzyklus dann nur noch 95 Preforms pro Zyklus erstellen. Ein Formraum bleibt dann einfach leer. Um zu verhindern, dass bei der Nachbehandlung unnötig Kühlmittel und/oder Vakuum bzw. Unterdruck über ein Nachbehandlungselement und/oder ein Übergabeelement in ein Aufnahmeelement abgegeben wird, welches keinen Preform trägt, kann die Verschlusskappe verwendet werden.

Weitere Vorteile, Merkmale und Anwendungsmöglichkeiten der vorliegenden Erfindung werden deutlich anhand der folgenden Beschreibung bevorzugter Ausführungsformen und der zugehörigen Figuren.

Es zeigen:
- Fig. 1: eine schematische Darstellung eines PET-Spritzgießsystems mit Nachbehandlungseinheit,
- Fig. 2: eine Detailansicht der Nachbehandlungseinheit,
- Fig. 3 bis 6: verschiedene schematische Darstellungen einer ersten Ausführungsform,
- Fig. 7: eine zweite Ausführungsform,
- Fig. 8: eine dritte Ausführungsform,
- Fig. 9: eine vierte Ausführungsform,
- Fig. 10 bis 12: verschiedene schematische Darstellungen der Ausführungsform von Fig. 9,
- Fig. 13: eine fünfte Ausführungsform,
- Fig. 14: eine sechste Ausführungsform,
- Fig. 15: eine siebte Ausführungsform,
- Fig. 16: eine Schnittansicht des Nachbehandlungselementes der siebten Ausführungsform,
- Fig. 17: eine Schnittansicht des Übergabeelementes der siebten Ausführungsform,
- Fig. 18: eine Schnittansicht des Übergabeelementes von Fig. 17 mit Verschlusskappe,
- Fig. 19: eine achte Ausführungsform des Nachbehandlungselementes.
- Fig. 20: eine perspektivische Ansicht des Nachbehandlungselementes von Fig. 18,
- Fig. 21: eine perspektivische Ansicht eines Übergabeelementes und
- Fig. 22 und 23: eine Stirnansicht sowie eine perspektivische Ansicht des Nachbehandlungsstiftes der siebten Ausführungsform.

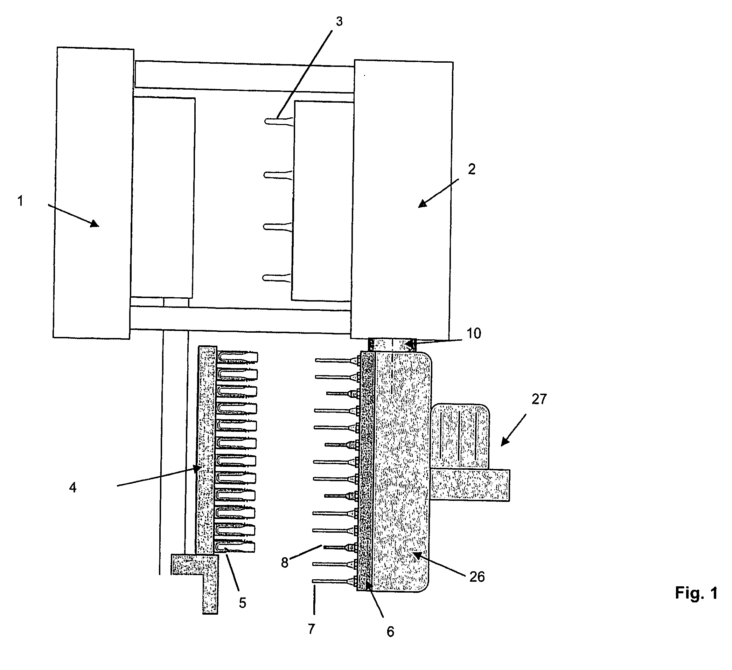

Fig. 1 zeigt eine schematische Darstellung eines PET-Spritzgießsystems mit Nachbehandlungseinheit. Die Spritzgießform besteht aus zwei relativ zueinander beweglichen Platten 1, 2, wobei in der gezeigten Ausführungsform eine Platte 1 stationär und eine Platte 2 beweglich ist.

Die eine Platte weist Kerne 3 auf, während die andere Platte entsprechende Kavitäten (nicht gezeigt) besitzt. Die beiden Platten können relativ zueinander von einer geöffneten Position, die in der Fig. 1 gezeigt ist, in eine geschlossene Position bewegt werden, in der die Kerne 3 der beweglichen Platte 2 in den entsprechenden Kavitäten der stationären Platte 1 angeordnet sind. Zwischen den Kavitäten der stationären Platte 1 und den Kernen 3 der beweglichen Platte 2 bildet sich dann der sogenannte Formraum, der mit plastifiziertem PET gefüllt wird, um einen Vorformling auszubilden.

Sobald die äußeren Flächen des Vorformlings abgekühlt, d.h. fest geworden sind, wird die Form geöffnet und ein als Platten ausgebildetes Entnahmeelement 4 wird zwischen die geöffneten Platten 1, 2 gefahren. Die auf den Kernen 3 der sich bewegenden Platte sitzenden Preforms werden dann in entsprechende ebenfalls als Kavitäten ausgebildete Aufnahmeelemente übergeben.

Im gezeigten Beispiel weist das Spritzgießwerkzeug vier Kerne auf, d.h. im Spritzgießzyklus werden vier Vorformlinge hergestellt. Das entsprechende Entnahmeelement 4 weist jedoch 12 (3x4) Aufnahmeelemente 5 auf, die jeweils einen Vorformling aufnehmen können. Das Entnahmeelement 4 weist somit drei Gruppen von Aufnahmekavitäten auf, die nacheinander mit entsprechenden Vorformlingen bestückt werden. Sobald die Vorformlinge von den Kernen 3 auf die Aufnahmeelemente 5 des Entnahmeelementes 4 übergeben worden sind, wird das Entnahmeelement 4 wieder in die in Fig. 1 gezeigte Position gefahren, und die Spritzgießform, bestehend aus den beiden Platten 1, 2 kann wieder geschlossen werden. Da in der gezeigten Ausführungsform das Entnahmeelement mit der stationären Platte 1 verbunden ist, bewegt sich das mit der sich bewegenden Platte 2 verbundene Nachbehandlungselement 6 auf das Entnahmeelement 4 zu. Das Nachbehandlungselement 6 weist eine Reihe von Nachbehandlungsstiften 7 auf, die, während die Form geschlossen ist, in die im Entnahmeelement 4 gehaltene Preforms eintauchen.

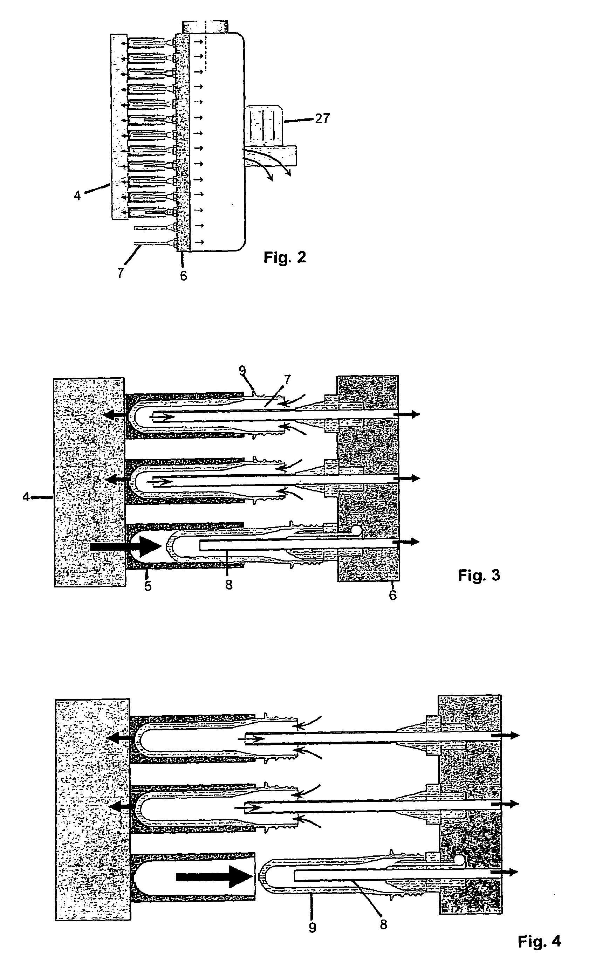

Diese Situation ist in Fig. 2 zu erkennen.

Die einzelnen Nachbehandlungsstifte sind auf einer Stiftplatte montiert. Weiterhin sind Übergabeelemente 8 an der Stiftplatte befestigt, die für die Übergabe der nachbehandelten Preforms von der Entnahmeplatte 4 auf die Übergabeelemente 8 bzw. das Nachbehandlungselement 6 dienen. An dem Nachbehandlungselement 6 ist ein Gebläse 27 befestigt, mit dem in einer Druckkammer 26 Überdruck oder Unterdruck erzeugt werden kann. Die gesamte Nachbehandlungsplatte 6 ist um die Welle 9 drehbar gestaltet, so daß das Nachbehandlungselement um 90° gedreht werden kann, so daß durch die Schwerkraft die auf dem Übergabeelement 8 sitzenden Vorformlinge abgeworfen werden können.

Wie in Fig. 2 zu erkennen ist, wird sowohl über das Entnahmeelement 4 als auch über das Nachbehandlungselement 6 Luft aus dem durch Aufnahmeelement 5 einerseits und Nachbehandlungsstift 7 bzw. Übergabeelement 8 gebildeten Nachbehandlungsraum evakuiert. Ersteres führt dazu, daß die Vorformlinge sicher in den Aufnahmeelementen 5 gehalten werden.

Weiterhin erkennt man in den Figuren 1 und 2, dass das Nachbehandlungselement 6 mehr Stifte aufweist als die Entnahmeplatte 4 Aufnahmekavitäten aufweist. Die Entnahmeplatte kann daher in mehreren unterschiedlichen Positionen (im gezeigten Beispiel 3) relativ zum Nachbehandlungselement 6 positioniert werden. Die entsprechenden Positionen werden nacheinander, nachdem jeweils ein neuer Satz von Preforms aus der Spritzgießform entnommen worden ist, eingenommen, so dass jeweils der am längsten in der Entnahmeplatte 4 gehaltene Preformsatz gegenüber den Übergabeelementen 8 positioniert wird und daher entnommen werden kann.

In Fig. 3 ist eine vergrößerte Darstellung gezeigt. Man erkennt drei Aufnahmeelemente 5, die am Entnahmeelement 4 befestigt sind. Gegenüber sind zwei Nachbehandlungsstifte 7 sowie ein Übergabeelement 8 an dem Nachbehandlungselement 6 befestigt. Die Nachbehandlungselemente weisen einen als Hülse ausgebildeten Stift auf, dessen eines Ende mit einer Vakuum - oder Unterdruckquelle verbunden ist. Bei der gezeigten Ausführungsform wird hierfür das Gebläse 7 verwendet. Dies führt dazu, daß an dem dem Nachbehandlungselement 6 abgewandten Ende der Hülse Kühlluft aus dem Inneren des Preforms 9 abgeführt wird. Die Spitze des stiftförmigen Kanalelementes dient somit als Kühlmittelauslass, während an der Öffnungsseite des Preforms Kühlmittel aus der Umgebung in den Preform hereinströmt. Die gezeigte Ausführungsform sorgt für einen kontinuierlichen Luftstrom durch das Innere des Preforms, wobei die Luft durch den ringförmigen Spalt zwischen dem stiftförmigen Kanalelement und der Innenseite des Preforms 9 bis in den Bodenbereich des Preforms strömt und diesen durch den Kühlmittelauslass an der Spitze des stiftförmigen Kanalelementes 7 verlässt.

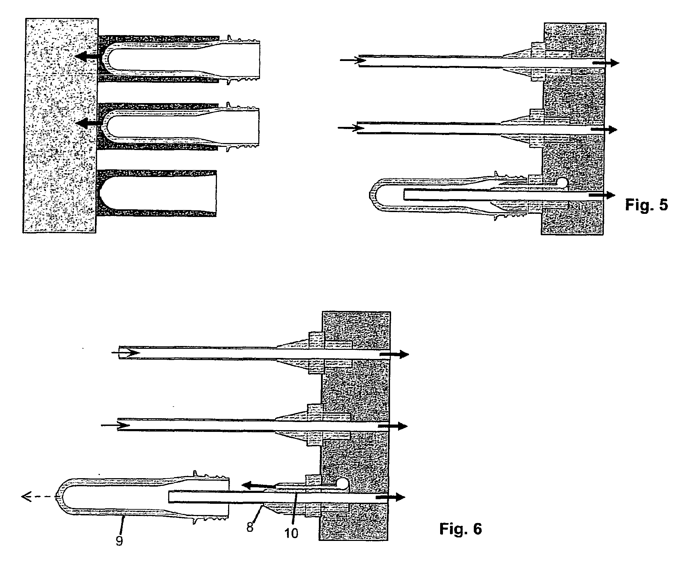

Um den vollständig nachbehandelten, d.h. auch im Inneren abgekühlten Preform aus dem Aufnahmeelement 5 zu entnehmen, wird das entsprechende Aufnahmeelement mit Überdruck beaufschlagt, so daß der in dem entsprechenden Aufnahmeelement 5 sitzende Preform 9 auf das Übergabeelement 8 übergeben wird. Wird das Spritzgießwerkzeug wieder geöffnet, wodurch auch die Nachbehandlungseinheit bestehend aus dem Entnahmeelement 4 und dem Nachbehandlungselement 6 wieder geöffnet wird, so verbleibt der entsprechende Preform 9 auf dem Übergabeelement 8, während die den Nachbehandlungsstiften gegenüberliegenden Preforms in den entsprechenden Aufnahmeelementen verbleiben. Die Situation ist in den Fig. 4 und 5 dargestellt.

Zum endgültigen Entnehmen des auf dem Übergabeelement 8 sitzenden Preforms 9 ist eine in Fig. 6 gezeigte Zuführung für Druckluft vorgesehen, die dafür sorgt, daß der Preform im richtigen Zeitpunkt von dem Übergabeelement 8 abgestoßen wird.

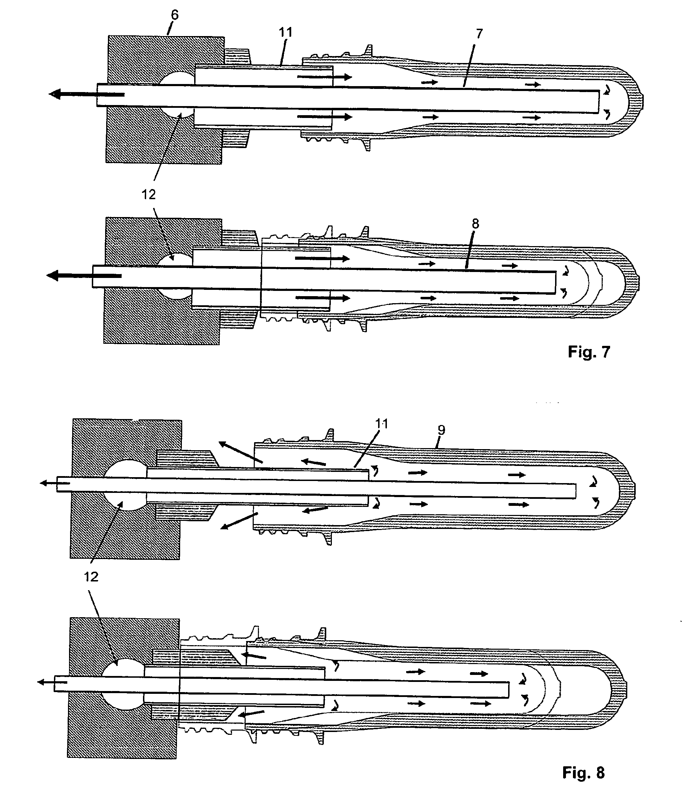

In Fig. 7 ist eine alternative Ausführungsform des Nachbehandlungsstiftes gezeigt. Hier besteht der Nachbehandlungsstift ebenfalls aus einem stiftförmigen Kanalelement 7, welches jedoch an seinem der Stiftplatte 6 zugewandten Ende von einer Hülse konzentrisch umgeben ist. Über diese Hülse 11 wird über einen entsprechenden Versorgungskanal 12 Luft in das Innere des Preforms geleitet. Die Hülse 11 dient somit als Kühlmitteleinlaß, während die Spitze des stiftförmigen Kanalelementes wieder als Kühlmittelauslass fungiert. In Fig. 7 ist in der unteren Darstellung wieder ein entsprechendes Übergabeelement 8 dargestellt, das im wesentlichen gleich wie das Nachbehandlungselement 7 ausgebildet ist, wobei lediglich das stiftförmige Kanalelement etwas kürzer ausgebildet ist, so daß der Preform 9 in die in Fig. 7 unten ebenfalls dargestellte Übergabeposition gebracht werden kann, ohne daß die Spitze des stiftförmigen Kanalelementes auf den Boden des Preforms trifft. Bei der hier gezeigten Ausführungsform übernimmt das Übergabeelement eine Doppelfunktion, da es sowohl für die Übergabe des Preforms als auch für die Nachbehandlung, d.h. die entsprechende Zuführung von Luft, dient.

In Fig. 8 ist eine weitere alternative Ausführungsform dargestellt. Diese unterscheidet sich von der in Fig. 7 dargestellten Ausführungsform lediglich dadurch, daß die Hülse 11 einen geringeren Durchmesser hat, so daß sich zwischen der Hülse 11 und dem Preform 9 ein Ringspalt ergibt. Dies hat zur Folge, daß sich die Luftströmung beim Verlassen der Hülse 11 aufteilt. Ein Teil der Luft strömt über den Gewindebereich des Preforms 9 nach außen, während ein anderer Teil der Luft bis in den Bodenbereich strömt und dort über die Spitze des stiftförmigen Kanalelementes den Preform verläßt.

Bei den in den Fig. 7 und 8 gezeigten Ausführungsformen wird jeweils die Hülse 11 mit Überdruck beaufschlagt. Es ist daher nicht notwendig, daß das stiftförmige Kanalelement an seinem der Stiftplatte zugewandten Ende mit einer Vakuumquelle verbunden ist, sondern dieses kann einfach mit der Umgebung verbunden sein. Alternativ wäre es auch möglich, das stiftplattenseitige Ende des stiftförmigen Kanalelementes mit einer Vakuum- oder Unterdruckquelle zu verbinden und die Hülse 11 mit der Umgebung. Bei dieser Ausführungsform ist jedoch eine Aufteilung des Kühlmittelstroms derart, dass ein Teil über das stiftförmige Kanalelement und ein anderer Teil über die Preformöffnung aus diesem abgeführt wird, in der Regel nicht verwirklichbar.

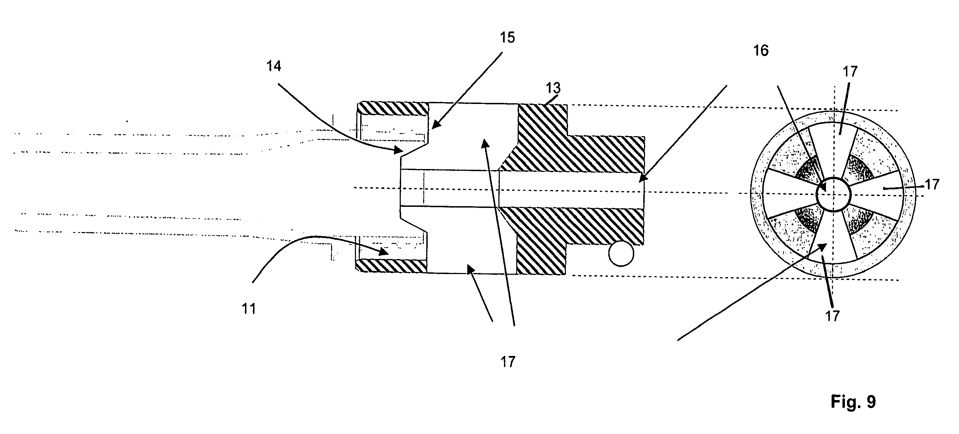

In den Fig. 9 bis 12 ist eine weitere Ausführungsform eines Nachbehandlungselementes gezeigt. Das Hülsenelement 11 ist hier einstückig mit einem Halteelement 13 ausgebildet, welches in Richtung des Preforms einen Vorsprung mit einer inneren Führungsfläche 14 sowie einen Anschlag 15 für den Preform aufweist. Das Element 13 hat eine innere Bohrung 16, in die das stiftförmige Kanalelement 7 eingesteckt wird. Weiterhin sind eine Reihe von Ausnehmungen 17 vorgesehen, die zur Zuführung der Luft dienen. Zur Verdeutlichung ist in Fig. 9 rechts eine Stirnansicht gezeigt.

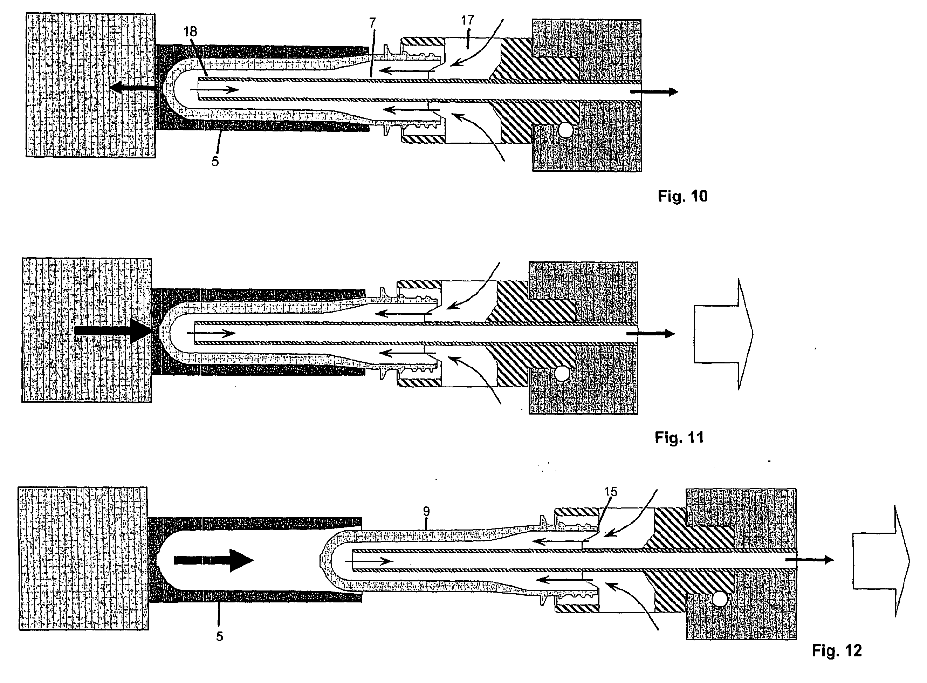

In Fig. 10 ist die Ausführung von Fig. 9 mit eingesetztem stiftförmigen Kanalelement dargestellt. In der hier gezeigten Situation wird der Preform durch ein entsprechendes Vakuum im Aufnahmeelement gehalten, während aufgrund des Unterdruckes an dem dem Aufnahmeelement 5 abgewandten Ende des stiftförmigen Kanalelementes 7 Luft durch die Ausnehmungen 17 in den Preform herein und über das Ende 18, das als Kühlmittelauslass fungiert, aus dem Preform abgesaugt wird.

In Fig. 11 wird nun das Aufnahmeelement 5 mit Druckluft beaufschlagt, während Nachbehandlungselement und Aufnahmeelement voneinander weg bewegt werden. Dies hat zur Folge, daß der Preform 9 aus dem Aufnahmeelement 5 gedrückt wird, bis er die Kontaktfläche 15 berührt. In dieser Position sorgt eine Sog- und Vakuumwirkung durch das stiftförmige Kanalelement 7 dafür, dass der Preform auf dem Übergabeelement gehalten wird.

Bei der in den Fig. 9 bis 12 gezeigten Ausführungsform unterscheiden sich die Nachbehandlungselemente und die Übergabeelement nicht. Statt dessen haben sie eine entsprechende Doppelfunktion inne. Bei dieser Ausführungsform ist es daher nicht notwendig, dass mehr Nachbehandlungsstifte als Aufnahmekavitäten in der Entnahmeplatte vorhanden sind vorzusehen, was nicht nur die Kosten für die Herstellung der Nachbehandlungsplatte reduziert, sondern auch den notwendigen Kühlmittelzufluß verringert, da weniger Nachbehandlungsstifte mit Kühlmittel versorgt werden müssen.

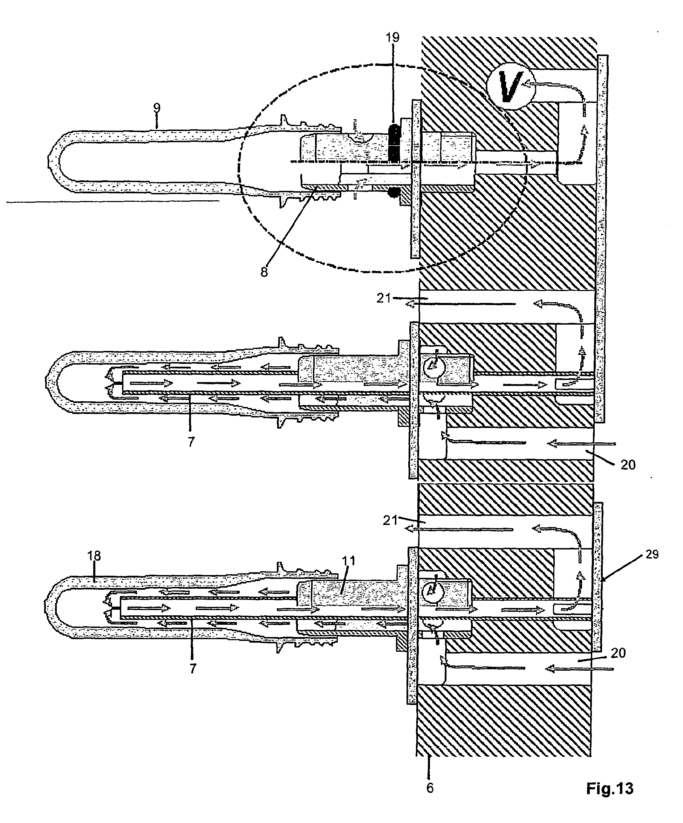

In Fig. 13 ist eine weitere Ausführungsform gezeigt. Die Stiftplatte 6 weist zwei Nachbehandlungselemente (in der Mitte und unten dargestellt) sowie ein Übergabeelement (in der Figur oben dargestellt) auf. Das Übergabeelement 8 unterscheidet sich von den Nachbehandlungselementen dadurch, daß das stiftförmige Kanalelement fehlt und eine zusätzliche Dichtung 19 vorgesehen ist, die während der Übergabe mit dem Preform 9 in Kontakt treten kann. In der in Fig. 13 gezeigten Ausführungsform ist das Übergabeelement mit einer Vakuumquelle verbunden, was ermöglicht, daß der Preform 9 auf dem Übergabeelement 8 gehalten werden kann, wenn er mit der Dichtung 19 in Kontakt tritt, da sich dann innerhalb des Preforms 9 ein leichter Unterdruck ausbildet. Die beiden anderen Stifte 7 sind zur Nachbehandlung des Preforms 9 vorgesehen. Hier wird über ein Gebläse (nicht gezeigt) über die Zuführungen 20 Luft über die Hülse 11 ins Innere des Preforms eingeleitet. Diese Luft strömt über die Spitze 18 des stiftförmigen Kanalelementes aus dem Preform und über die Kanäle 21 in die Umgebung. Dabei wird die Luft über entsprechende Umleitbleche 29 umgeleitet, so dass das Kühlmittel über die Rückseite der Nachbehandlungsplatte (die den stiftförmigen Nachbehandlungsstiften abgewandte Seite der Nachbehandlungsplatte) zugeführt und auf der Vorderseite wieder abgeführt wird.

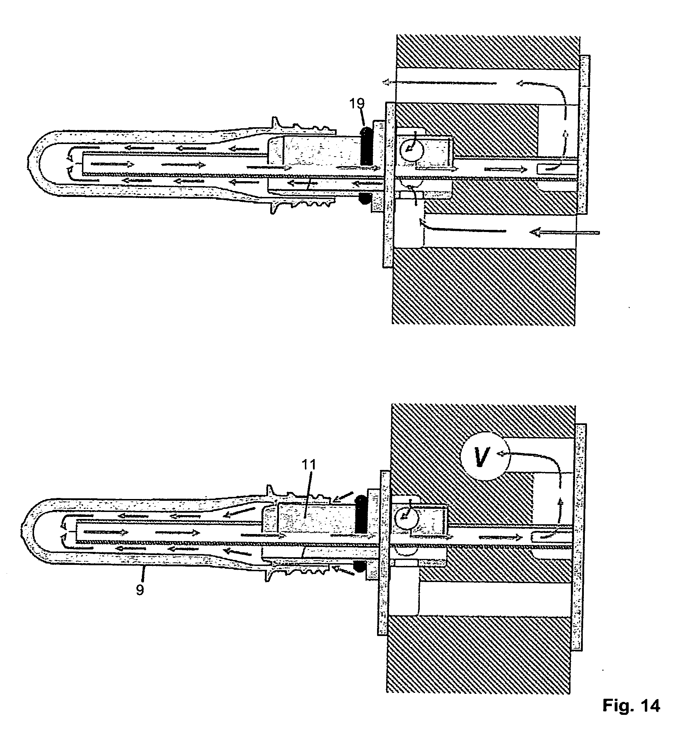

In Fig. 14 ist eine weitere alternative Ausführungsform gezeigt. In Fig. 14 oben ist die Nachbehandlungssituation gezeigt, der wie in der in Fig. 13 gezeigten Ausführungsform funktioniert.

Die Nachbehandlungselemente weisen jedoch alle eine entsprechende Dichtung 19 auf, was erleichtert, dass die Stifte sowohl zur Nachbehandlung als auch zur Übergabe verwendet werden können. Grundsätzlich kann die Übergabe jedoch auch ohne eine entsprechende Dichtung 19 erfolgen. Obgleich die Stifte unterschiedliche Funktionen haben sind sie identisch aufgebaut, was die Kosten für die Lagerhaltung reduziert, da nicht sowohl Übergabeelemente als auch Nachbehandlungselement vorrätig gehalten werden müssen.

In Fig. 14 unten ist die Übergabesituation gezeigt. Hier ist die Hülse 11 mit einer Vakuumquelle verbunden, was bewirkt, daß der Preform 9 auf die Hülse 11 gezogen wird, wodurch eine Übergabe des Preforms möglich ist.

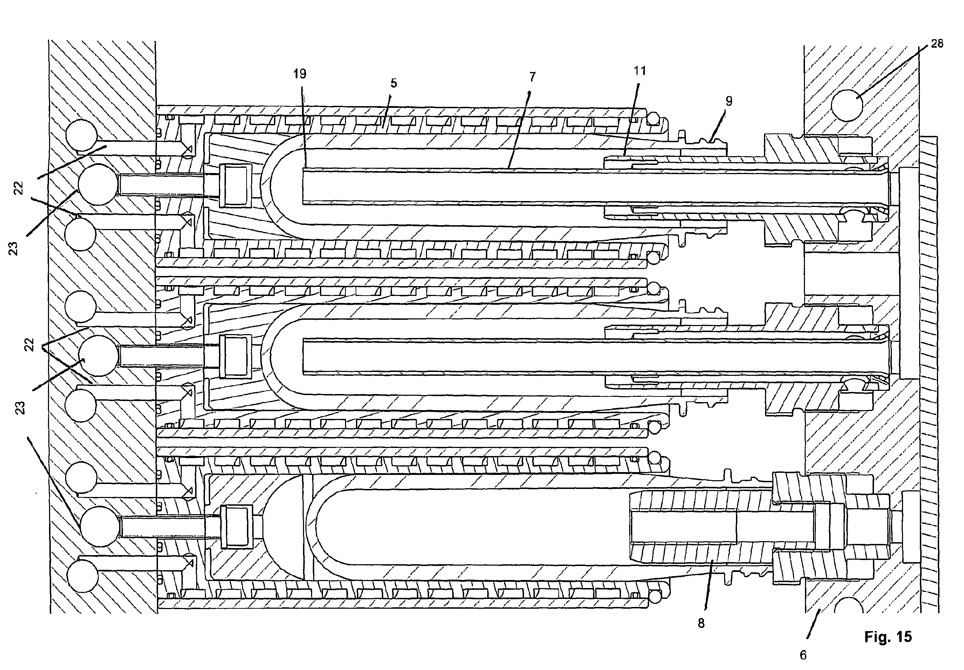

In Fig. 15 ist eine Schnittansicht einer weiteren Ausführungsform gezeigt. Auch hier sind an der Stiftplatte 6 ein Übergabeelement 8 sowie zwei Nachbehandlungselemente 7 befestigt. In der in Fig. 15 gezeigten Situation ist ebenso das Aufnahmeelement 5 dargestellt, welches über die Kühlkanäle 22 über spiralförmige Kanäle gekühlt wird. Am Boden des Aufnahmeelementes 5 kann über die Zuführung 23 wahlweise Druckluft oder Vakuum zugeführt werden, um den Preform 9 entweder innerhalb der Aufnahmekavität 5 zu halten oder aus dieser herauszustoßen. Das stiftförmige Kanalelement 7 ist konzentrisch von einer Hülse 11 umgeben, über die Kühlluft ins Innere des Preforms geleitet wird, welche über die Spitze 19 des stiftförmigen Kanalelementes 7 abgeführt wird. Weiterhin sind Kühlkanäle 28 vorgesehen, mit deren Hilfe die Nachbehandlungsplatte gekühlt, vorzugsweise wassergekühlt werden kann.

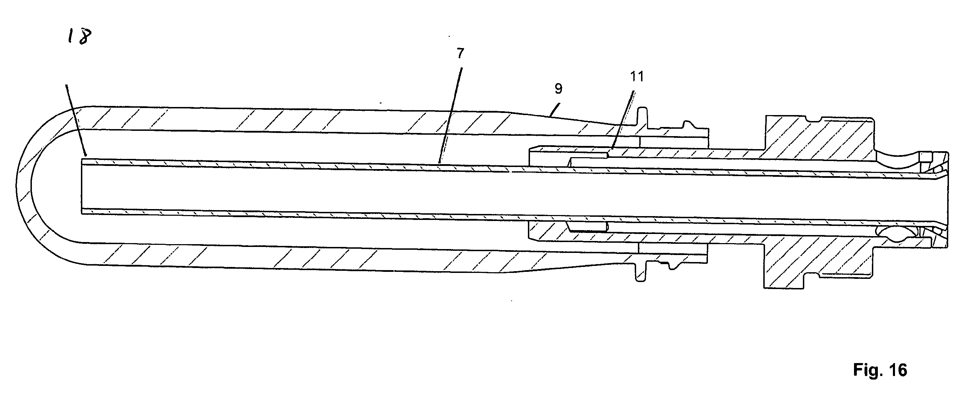

Das stiftförmige Kanalelement 7 ist in Fig. 16 vergrößert dargestellt. Man erkennt, daß in der gezeigten Situation die Kühlluft, die über die Hülse 11 zugeführt wird, sowohl bis in den Bodenbereich des Preforms 9 geleitet wird, um dann dort über die Spitze des stiftförmigen Kanalelementes 7 abgeleitet zu werden, als auch den Preform 9 über die Preformöffnung verlassen kann, da zwischen der Außenseite der Hülse 11 und der Innenseite des Preforms 9 ein Spalt angeordnet ist.

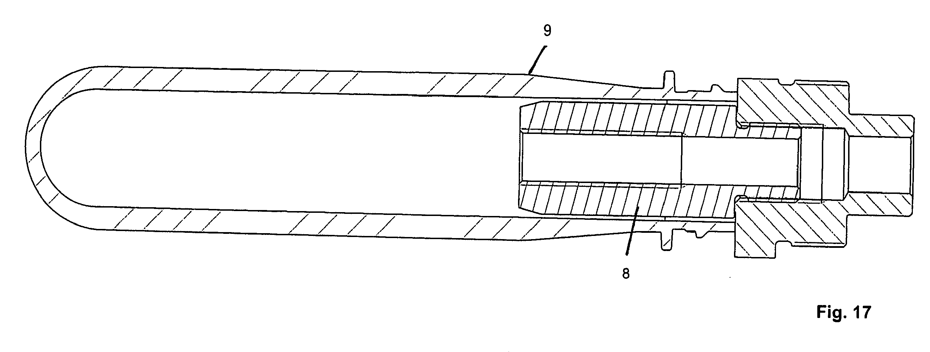

In Fig. 17 ist eine vergrößerte Ansicht des entsprechenden Übergabeelementes 8 gezeigt. Dieses Übergabeelement 8 hat eine zentrale Bohrung, die wahlweise mit Vakuum oder Druckluft beaufschlagt werden kann, um den Preform 9 zu halten oder abzustoßen.

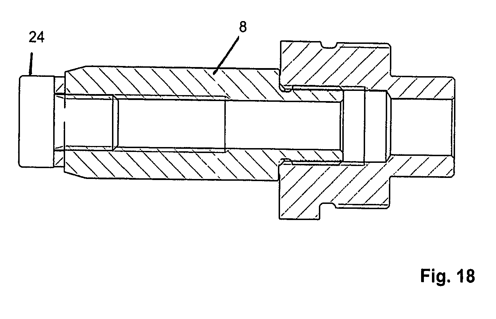

In Fig. 18 ist ein entsprechendes Übergabeelement 8 gezeigt, wobei hier eine Verschlusskappe 24 auf die Durchgangsbohrung gesetzt ist, um diese zu verschließen. Es kann nämlich während des Betriebes einer Spritzgießform vorkommen, daß aus irgendwelchen Gründen einer der Mehrzahl von Formräumen, mit der die entsprechenden Preforms hergestellt werden, nicht mehr verwendet werden kann. Die Form kann trotzdem weiterverwendet werden, wobei dann eben je Spritzgießzyklus ein Preform weniger hergestellt wird. Da jedoch das Nachbehandlungselement in der Regel mehrere Übergabeelemente 8 aufweist, die gleichzeitig Preforms von dem Entnahmeelement übernehmen sollen und daher mit Druckluft beaufschlagt werden, ist es von Vorteil, alle Übergabeelemente 8 mit ein und derselben Vakuumquelle zu verbinden. Fehlt jedoch an einem Übergabeelement ein entsprechender Preform, kann dort kein Unterdruck aufgebaut werden. Statt dessen strömt hier ungehindert Luft ein, so dass möglicherweise auch bei benachbarten Übergabeelemente kein ausreichend großer Unterdruck erzeugt werden kann, so dass benachbarte Preforms nicht übergeben werden können. Daher wird bei dem betreffenden Übergabeelement 8 eine entsprechende Verschlusskappe 24 aufgebracht, um den Druckverlust zu minimieren.

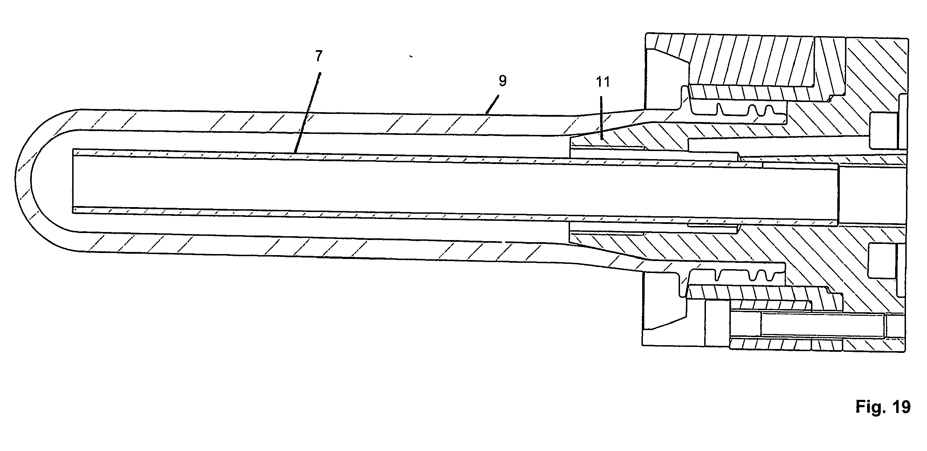

In Fig. 19 ist eine weitere Ausführungsform gezeigt. Diese unterscheidet sich von den vorherigen im wesentlichen dadurch, daß die Hülse 11 hier derart ausgebildet ist, daß sie im wesentlichen der Innenkontur des Preforms 9 entspricht, so daß die Innenseite des Preforms 9 im Öffnungsbereich, d.h. insbesondere im Bereich des Gewindes mit der Hülse 11 in Kontakt tritt. Wird die Hülse 11 zusätzlich gekühlt, kann so der Gewindebereich, der in der Regel besonders dicke Abschnitte aufweist und daher entsprechend viel Wärme enthält, sehr effektiv abgekühlt werden. Zudem steht dann der komplette Luftstrom für das stiftförmige Kanalelement 7 zur Verfügung.

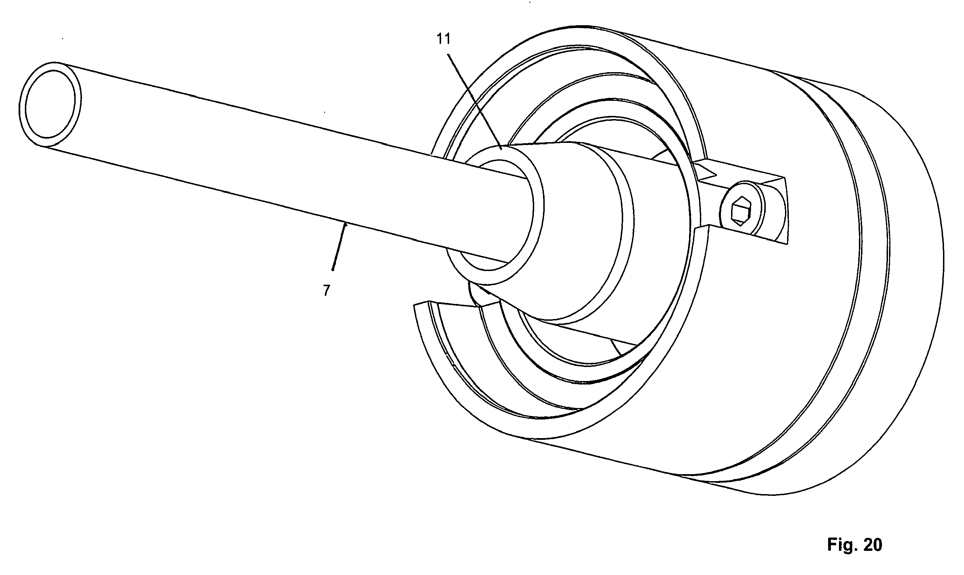

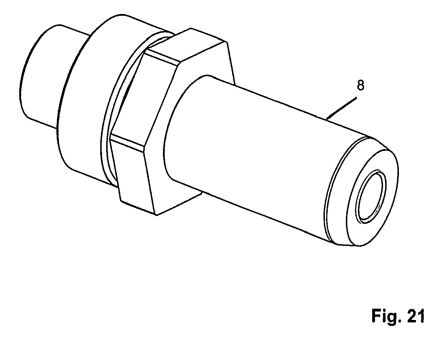

In den Fig. 20 und 21 sind perspektivische Ansichten des Nachbehandlungselementes (Fig. 20) bzw. des Übergabeelementes (Fig. 21) gezeigt.

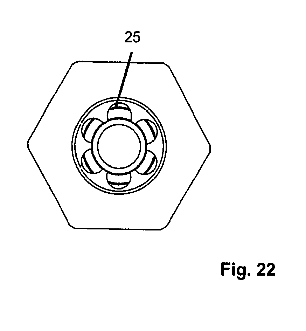

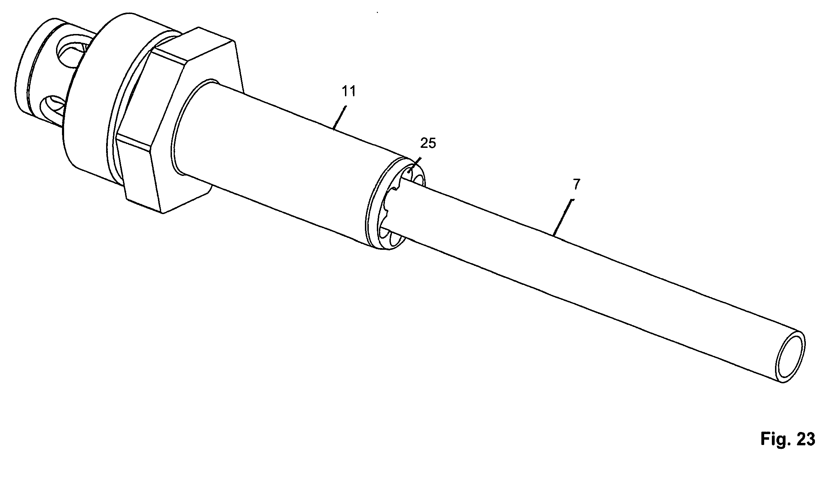

Eine alternative Ausführungsform des Nachbehandlungselementes 7 ist in einer perspektivischen Ansicht in Fig. 23 und in einer Draufsicht von oben in Fig. 22 gezeigt. Hier besteht das Nachbehandlungselement aus einem stiftförmigen Kanalelement 7, welches in einer mit einer Durchgangsbohrung versehenen Hülse 11 mit eingefrästen Nuten 25 eingesetzt ist. Die Durchgangsbohrung der Hülse 11 ist entsprechend dem Außendurchmesser des stiftförmigen Kanalelementes 7 ausgebildet, so daß sich stiftförmiges Kanalelement 7 und Hülse 11 berühren. Die nutenförmigen Ausfräsungen 25 dienen dann der Luftzufuhr. Durch die erfindungsgemäße Ausgestaltung des Nachbehandlungssystems ist eine kostengünstige und gleichzeitig hoch effektive Nachbehandlung der Vorformlinge möglich.

### Bezugszeichenliste

- 1, 2: bewegliche Platten
- 3: Kerne
- 4: Entnahmeelement
- 5: Aufnahmeelement
- 6: Nachbehandlungselement, Stiftplatte
- 7: Nachbehandlungsstift, Kanalelement
- 8: Übergabeelement
- 9: Welle
- 9: Preform
- 11: Hülse
- 12: Versorgungskanal
- 13: Halteelement
- 14: Führungsfläche
- 15: Anschlag, Kontaktfläche
- 16: innere Bohrung
- 17: Ausnehmung
- 18: Ende, Kühlmittelauslass
- 19: Dichtung
- 20: Zuführung
- 21: Kanal
- 22: Kühlkanal
- 23: Zuführung
- 24: Verschlußkappe
- 25: Nut
- 26: Druckkammer
- 27: Gebläse
- 28: Kühlkanal
- 29: Umlenkblech

## Patentansprüche

1. System zur Nachbehandlung von mittels Spritzgießen hergestellter Vorformlinge (9) mit
(i) einem Entnahmeelement (4), welches
a) zumindest ein Aufnahmeelement (5) zur Aufnahme eines Preforms (9) und
b) eine Vorrichtung zum Bewegen des Entnahmeelements (4) zwischen zwei Werkzeughälften einer geöffneten Spritzgleßform und zum Bewegen des Entnahmeelements (4) aus der geöffneten Spritzgießform heraus aufweist.
(ii) einem Nachbehandlungselement (6), welches
a) zumindest einen Nachbehandlungsstift (7),
a1) mit einem stiftförmigen Kanalelement (7),
a11) dessen eines Ende mit der Umgebung oder einer Vakuum - oder Unterdruckquelle verbunden werden kann,
a12) dessen anderes Ende eines Auslass (18) für ein Kühlmittel aufweist, und
(iii) einer Bewegungsvorrichtung, mit der das Entnahmeelement (4) relativ zum Nachbehandlungselement (6) zwischen einer ersten Position, in der der Nachbehandlungsstift (7) innerhalb des Aufnahmelementes (5) positioniert ist, und einer zweiten Position, in der der Nachbehandlungsstift (7) nicht innerhalb des Aufnahmelementes (5) positioniert ist, hin- und herbewegt werden kann,
wobei Entnahmeelement (4) und Nachbehandlungselement (6) derart ausgebildet sind, dass in der ersten Position über den Kühlmitteleinlass Kühlmittel in einen im Aufnahmeelement (5) gehaltenen Preform (9) derart eingebracht werden kann, dass es zwischen der Innenwand des Preforms (9) und Außenwand des stiftförmigen Kanalelementes (7) zum Kühlmittslausiass (18) strömen und das Kanalelement (7) abgeführt werden kann, wobei das Nachbehandlungselement (6) einen Kühlmitteleinlass aufweist, welcher außerhalb des stiftförmigen Kanalelementes (7) angeordnet ist, wobei der Kühlmitteleinlass als Hülse (11) ausgebildet ist, welche das stiftförmige Kanalelement (7) umgibt, so dass das Kühlmittel über einen sich zwischen stiftförmigem Kanalelement (7) und Hülse (11) bildenden Spalt zugeführt werden kann, **dadurch gekennzeichnet, dass** die dadurch gekennziechnet, dass Hülse (11) derart ausgebildet ist, dass Kühlmittel über die Hülse derart zugeführt werden kann, dass ein Teil des Kühlmittels über den Kühmittelauslass (18) und ein anderer Teil über die Öffnung des Vorformlings (9) abgeführt wird.

2. System nach Anspruch 1, **dadurch gekennzeichnet, dass** eine Strömungsmaschine vorgesehen ist, die am Kühlmitteleinlass einen Kühtftulddruck zwischen 1 und 3 bar, vorzugsweise zwischen 1 und 1,5 bar und am besten zwischen 1 und 1,2 bar bereitstellt.

3. System nach einem der Ansprüche 1 bis 2, **dadurch gekennzeichnet, dass** eine Strömungsmaschine vorgesehen ist, die am Kühlmittelauslass (18) einen Kühlfluiddruck von weniger als 1 bar, vorzugsweise zwischen 0,8 und 1 bar und besonders bevor zugt zwischen 0,9 und 0,99 bar bereitstellt.

4. System nach einem der Ansprüche 1 bis 3, **dadurch gekennzeichnet, dass** das Nachbehandlungselement (6) mindestens ein Übergabeelement (8) aufweist, mit welchem ein Preform (9) vom Entnahmeelement (4) zum Nachbehandlungselement (6) übergeben werden kann.

5. System nach Anspruch 4, **dadurch gekennzeichnet, dass** das Übergabeelement (8) eine Übergabehülse (11) aufweist, wobei die Übergabehülse (11) einen Durchgangskanal (21) aufweist, dessen erstes Ende mit einer Vakuumquelle verbunden werden kann und dessen zweites Ende in der ersten Position innerhalb eines in dem Aufnahmeelement (5) aufgenommenen Vorformling (9) endet, wobei das zweite Ende vorzugsweise an der Umfangsfläche der Hülse (11) angeordnet ist.

6. System nach Anspruch 4 oder 5, **dadurch gekennzeichnet, dass** das Übergabeelement (8) einen Druckluftanschluss aufweist, über den Druckluft in den im Aufnahmeelement (5) aufgenommenen Vorformlinge (9) eingebracht werden kann, um den Vorformling (9) vom Übergabeelement (8) auszuwerfen.

7. System nach einem der Ansprüche 1 bis 6, **dadurch gekennzeichnet, dass** als Kühlmittel Luft verwendet wird.

8. System nach einem der Ansprüche 1 bis 7, **dadurch gekennzeichnet, dass** das Nachbehandlungselement (6) eine Kühmittelverteilerplatte aufweist, die mehrere Nachbehandlungsstifte (7) umfasst

9. System nach Anspruch 8, **dadurch gekennzeichnet, dass** die Kühmittelverteilerplatte um eine Drehachse gedreht werden kann, um Vorformlinge (9), die vom dem Entnahmeelement (4) auf die Kühmittelverteilerplatte übergeben wurden, auszuwerfen, wobei vorzugsweise die Kühmittelverteilerplatte um etwa 90° gedreht werden kann.

10. System nach Anspruch 8 oder 9, **dadurch gekennzeichnet, dass** die Strömungsmaschine an der Kühlmlttelvertellerplatte befestigt ist und einen Einlauf und einen Auslauf aufweist, wobei
der Einlauf mit dem Kühlmitteleinlass oder dem Kuhmittelaustass des zumindest einen Nachbehandlungsstift (7) verbunden ist, während der Auslauf mit einer Kühlmittetverteilerpiattenöffnung zur Umgebung verbunden ist, oder
der Auslauf mit dem Kühlmitteleinlass oder dem Kühlmittelauslass des zumindest einen Nachbehandlungsstift (7) verbunden ist, während der Einlauf mit der Kühlmittelverteilerplattenoffnung zur Umgebung verbunden ist,
wobei die Kühlmittelverteilerplattenöffnung vorzugsweise an der den Nachbehandlungsstiften (7) gegenüberliegenden Seite der Kühlmittelverteilerplatte angeordnet ist.

11. System nach einem der Ansprüche 1 bis 10, **dadurch gekennzeichnet, dass** die als Kühlmitteleinlass ausgebildete Hülse einen Außenumfang hat, der in etwa einem Abschnitt der Innenkontur des zu kühlenden Preforms entspricht, so dass in der ersten Position die Außenseite der Kühmitteleinlasshülse die Innenseite des Preforms berührt.

12. System nach einem der Ansprüche 8 bis 11, **dadurch gekennzeichnet, dass** die Kühlmittelverteilerplatte Kühlkanäle zur Zuführung eines Kühlmittels zur Kühlung der Kühlmittelvertellerplatte aufweist.

13. System nach einem der Ansprüche 1 bis 12, **dadurch gekennzeichnet, dass** eine Verschlusskappe vorgesehen ist, die auf das Kanalelement und/oder den Kühlmitteleinlass und/oder das Übergabeelement aufgesetzt werden kann, um diese zu verschließen.

## Claims

1. A system for the post-treatment of preforms (9) produced by means of injection moulding, comprising
i) a removal element (4) having
a) at least one receiving element (5) for receiving a preform (9), and
b) a device for moving the removal element (4) between two tool halves of an opened injection moulding mould and for moving the removal element (4) out of the opened injection moulding mould,
ii) a post-treatment element (6) having
a) at least one post-treatment pin (7)
a1) having a pin-shaped passage element (7),
a11) of which one end can be connected to the environment or a vacuum or reduced-pressure source and
a12) of which the other end has an outlet (18) for a coolant, and
iii) a motion device with which the removal element (4) can be reciprocated relative to the post-treatment element (6) between a first position in which the post-treatment pin (7) is positioned within the receiving element (5) and a second position in which the post-treatment pin (7) is not positioned within the receiving element (5),
wherein the removal element (4) and the post-treatment element (6) are so designed that in the first position coolant can be introduced by way of the coolant inlet into a preform (9) held in the receiving element (5) in such a way that it can flow between the inside wall of the preform (9) and the outside wall of the pin-shaped passage element (7) to the coolant outlet (18) and can be discharged by way of the passage element (7), wherein the post-treatment element (6) comprises a coolant inlet which is positioned outside of the pin-shaped passage element, wherein the coolant inlet is in the form of a sleeve surrounding the pin-shaped passage element (7) so that the coolant can be fed by way of a preferably annular gap formed between the pin-shaped passage element (7) and the sleeve (11), **characterized in that** the sleeve (11) is designed in a way that coolant can be fed over the sleeve in such a way that one part of the coolant is removed over the coolant outlet (18) and another part over the opening of a preform (9).

2. A system according to claim 1 **characterised in that** there is provided a flow machine which provides at the coolant inlet a cooling fluid pressure of between 1 and 3 bar, preferably between 1 and 1,5 bar and particularly preferably between 1 and 1,2 bar.

3. A system according to one of claims 1 to 2 **characterised in that** there is provided a flow machine which provides at the coolant outlet (18) a cooling fluid pressure of less than 1 bar, preferably between 0.8 and 1 bar and particularly preferably between 0.9 and 0.99 bar.

4. A system according to one of claims 1 to 3 **characterised in that** the post-treatment element (6) has at least one transfer element (8) with which a preform (9) can be transferred from the removal element (4) to the post-treatment element (6).

5. A system according to claim 4 **characterised in that** the transfer element (8) has a transfer sleeve (11), wherein the transfer sleeve (11) has a through passage (21) of which the first end can be connected to a vacuum source and the second end ends in the first position within a preform (9) received in the receiving element (5), the second end preferably being arranged at the peripheral surface of the sleeve (11).

6. A system according to claim 4 or claim 5 **characterised in that** the transfer element (8) has a compressed air connection, by way of which compressed air can be introduced into the preform (9) received in the receiving element (5) to eject the preform (9) from the transfer element (8).

7. A system according to one of claims 1 to 6 **characterised in that** air is used as the coolant.

8. A system according to one of claims 1 to 7 **characterised in that** the post-treatment element (9) has a coolant distributor plate including a plurality of post-treatment pins (7).

9. A system according to claim 8 **characterised in that** the coolant distributor plate can be rotated about an axis of rotation to eject preforms (9) which were transferred from the removal element (4) on to the coolant distributor plate, wherein preferably the coolant distributor plate can be rotated through about 90°.

10. A system according to claim 8 or claim 9 **characterised in that** the flow machine is fixed to the coolant distributor plate and has an intake and an outlet, wherein
the intake is connected to the coolant inlet or the coolant outlet of the at least one post-treatment pin (7) while the outlet is connected to a coolant distributor plate opening relative to the environment, or
the outlet is connected to the coolant inlet or the coolant outlet of the at least one post-treatment pin (7) while the intake is connected to the coolant distributor plate opening relative to the environment,
wherein the coolant distributor plate opening is preferably arranged at the side of the coolant distributor plate, that is opposite to the post-treatment pins (7).

11. A system according to one of claims 1 to 10 **characterised in that** the sleeve in the form of the coolant inlet has an outer periphery which approximately corresponds to a portion of the inside contour of the preform to be cooled so that in the first position the outside of the coolant inlet sleeve is in contact with the inside of the preform.

12. A system according to one of claims 8 to 11 **characterised in that** the coolant distributor plate has cooling passages for the feed of a coolant for cooling the coolant distributor plate.

13. A system according to one of claims 1 to 12 **characterised in that** there is provided a closure cap which can be fitted on to the passage element and/or the coolant inlet and/or the transfer element to close same.

## Revendications

1. Système de post-traitement de préformes (9) réalisées par moulage par injection, ledit système comportant
(I) un élément de retrait (4) qui comporte
a) au moins un élément de réception (5) destiné à recevoir une préforme (9) et
b) un dispositif pour déplacer l'élément de retrait (4) entre deux moitiés d'outil d'un moule de moulage par injection ouvert et pour extraire l'élément de retrait (4) du moule de moulage par injection ouvert,
(II) un élément de post-traitement (6) qui comporte
a) au moins une broche de post-traitement (7) dotée
a1) d'un élément formant canal (7) en forme de broche
a11) dont une extrémité peut être reliée à l'environnement ou à une source de vide ou de dépression,
a12) dont l'autre extrémité comporte une sortie (18) destinée à un agent de refroidissement, et
(III) un dispositif de déplacement au moyen duquel l'élément de retrait (4) peut être déplacé suivant un mouvement alternatif par rapport à l'élément de post-traitement (6) entre une première position dans laquelle la broche de post-traitement (7) est positionnée à l'intérieur de l'élément de réception (5) et une seconde position dans laquelle la broche de post-traitement n'est pas positionnée à l'intérieur de l'élément de réception (5),
dans lequel l'élément de retrait (4) et l'élément de post-traitement (6) sont conformés de telle sorte que dans la première position l'agent de refroidissement peut être introduit par l'entrée d'agent de refroidissement dans une préforme (9) maintenue dans l'élément de réception (5) de sorte qu'il peut s'écouler entre la paroi intérieure de la préforme (9) et la paroi extérieure de l'élément formant canal (7) en forme de broche en direction de la sortie d'agent réfrigérant (18) et que l'élément formant canal (7) peut être refroidi, l'élément de post-traitement (6) comportant une entrée d'agent de refroidissement qui est disposée à l'extérieur de l'élément formant canal (7) en forme de broche, l'entrée d'agent de refroidissement étant conformée en manchon (11) qui entoure l'élément formant canal (7) en forme de broche de sorte que l'agent de refroidissement peut être amené par une fente se formant entre l'élément formant canal (7) en forme de broche et le manchon (11),
**caractérisé en ce que** le manchon (11) est conformé de telle sorte que l'agent de refroidissement peut être amené par le manchon et **en ce qu'**une partie de l'agent de refroidissement est évacuée par la sortie d'agent de refroidissement (18) et une autre partie est évacuée par l'ouverture de la préforme (9).

2. Système selon la revendication 1, **caractérisé en ce qu'**une turbomachine est prévue qui fournit à l'entrée d'agent de refroidissement une pression de fluide de refroidissement entre 1 et 3 bars, de préférence entre 1 et 1,5 bar et le mieux entre 1 et 1,2 bar.

3. Système selon l'une des revendications 1 à 2, **caractérisé en ce qu'**une turbomachine est prévue qui fournit à la sortie d'agent de refroidissement (18) une pression de fluide de refroidissement de moins de 1 bar, de préférence entre 0,8 et 1 bar et de façon particulièrement préférée entre 0,9 et 0,99 bar.

4. Système selon l'une des revendications 1 à 3, **caractérisé en ce que** l'élément de post-traitement (6) comporte au moins un élément de transfert (8) au moyen duquel une préforme (9) peut être transférée de l'élément de retrait (4) à un élément de post-traitement (6).

5. Système selon la revendication 4, **caractérisé en ce que** l'élément de transfert (8) comporte un manchon de transfert (11), le manchon de transfert (11) comportant un canal de passage (21) dont une première extrémité peut être reliée à une source de vide et dont une seconde extrémité finit, dans la première position, à l'intérieur d'une préforme (9) reçue dans l'élément de réception (5), la seconde extrémité étant disposée de préférence au niveau de la surface périphérique du manchon (11).

6. Système selon la revendication 4 ou 5, **caractérisé en ce que** l'élément de transfert (8) comporte un raccord d'air comprimé par lequel de l'air comprimé peut être introduit dans la préforme (9), reçue dans l'élément de réception (5), pour éjecter la préforme (9) de l'élément de transfert (8).

7. Système selon l'une des revendications 1 à 6, **caractérisé en ce que** de l'air est utilisé comme agent de refroidissement.

8. Système selon l'une des revendications 1 à 7, **caractérisé en ce que** l'élément de post-traitement (6) comporte une plaque distributrice d'agent de refroidissement qui comporte plusieurs broches de post-traitement (7).

9. Système selon la revendication 8, **caractérisé en ce que** la plaque distributrice d'agent de refroidissement peut être tournée autour d'un axe de rotation pour éjecter des préformes (9) qui ont été transférées de l'élément de retrait (4) à la plaque distributrice d'agent de refroidissement, la plaque distributrice d'agent de refroidissement étant tournée de préférence de 90° environ.

10. Système selon la revendication 8 ou 9, **caractérisé en ce que** la turbomachine est fixée à la plaque distributrice d'agent de refroidissement et comporte une admission et une décharge,
l'admission étant reliée à l'entrée d'agent de refroidissement ou la sortie d'agent de refroidissement de l'au moins une broche de post-traitement (7) tandis que la décharge est reliée à une ouverture de plaque distributrice d'agent de refroidissement qui donne dans l'environnement, ou
la décharge étant reliée à l'entrée d'agent de refroidissement ou la sortie d'agent de refroidissement de l'au moins une broche de post-traitement (7) tandis que l'admission est reliée à l'ouverture de plaque distributrice d'agent de refroidissement qui donne dans l'environnement,
l'ouverture de plaque distributrice d'agent de refroidissement étant disposée de préférence du côté de la plaque distributrice d'agent de refroidissement qui est opposé aux broches de post-traitement (7).

11. Système selon l'une des revendications 1 à 10, **caractérisé en ce que** le manchon conformé en entrée d'agent de refroidissement possède une périphérie extérieure qui correspond à peu près à une portion du contour intérieur de la préforme à refroidir de sorte que dans la première position le côté extérieur du manchon d'entrée d'agent de refroidissement touche le côté intérieur de la préforme.

12. Système selon l'une des revendications 8 à 11, **caractérisé en ce que** la plaque distributrice d'agent de refroidissement comporte des canaux de refroidissement destinés à amener un agent de refroidissement pour refroidir la plaque distributrice d'agent de refroidissement.

13. Système selon l'une des revendications 1 à 12, **caractérisé en ce qu'**un capuchon de fermeture est prévu qui peut être placé sur l'élément formant canal et/ou l'entrée d'agent de refroidissement et/ou l'élément de transfert pour fermer ceux-ci.
